# DEMANDE DE BREVET EUROPEEN

(11) **EP 4 647 680 A1**
(43) Date de publication de la demande: **12.11.2025**
(21) Numéro de dépôt: 25164913.3
(22) Date de dépôt: 20.03.2025
(51) Int. Cl.: F24S 25/632, F24S 25/636, H02S 30/10, H01R 4/64, H01R 4/26, H02S 30/00, H01R 4/66

(54) **DISPOSITIF DE CONNEXION ÉLECTRIQUE**

(30) Priorité: 06.05.2024 FR 2404709
(71) Demandeur: Mobasolar, 68600 Wolfgantzen (FR)
(72) Inventeur: KELLER, Marc, 68127 OBERHERGHEIM (FR)
(74) Mandataire: Ipsilon

(57) **Abrégé**

L'invention concerne un dispositif de connexion électrique (1) entre une première pièce (2a) et une deuxième pièce (2b), la première pièce (2a) appartenant à un équipement électrique, et la deuxième pièce (2b) étant une pièce de fixation de la première pièce (2a) à une troisième pièce (2c) appartenant à une structure de support dudit équipement électrique.

Ce dispositif est particulier en ce qu'il comporte un premier moyen de connexion électrique (3a), un deuxième moyen de connexion électrique (3b), et une partie centrale (4), et lorsque ladite première pièce (2a) est fixée à ladite troisième pièce (2c) par l'intermédiaire de ladite deuxième pièce (2b), ledit premier moyen de connexion électrique (3a) soit relié électriquement à ladite première pièce (2a), ledit deuxième moyen de connexion électrique (3b) soit relié électriquement à ladite deuxième pièce (2b), et la partie centrale (4) soit intercalée entre la deuxième pièce (2b) et la troisième pièce (2c).

## Description

### Domaine technique

La présente invention concerne un dispositif de connexion électrique pour relier électriquement une première pièce et une deuxième pièce, la première pièce appartenant à un équipement électrique, et la deuxième pièce étant une pièce de fixation de la première pièce à une troisième pièce, la troisième pièce appartenant à une structure de support sur laquelle est monté ledit équipement électrique. L'invention permet, par exemple, de mettre à la terre une des pièces automatiquement lors de leur assemblage entre elles.

L'invention trouve une application particulièrement avantageuse pour la mise à la terre des cadres de panneaux photovoltaïques.

### Technique antérieure

Le Demandeur développe des solutions particulièrement pertinentes pour mettre à la terre automatiquement des équipements électriques lors de leur montage.

Il est notamment titulaire du brevet EP2684252, qui propose un dispositif de connexion de mise à la terre d'une installation électrique. Ce dispositif comporte des moyens d'auto-connexion permettant de créer une liaison électrique automatiquement lors du montage d'équipements électriques, tels que des cadres de panneaux photovoltaïques, sur leurs supports.

Ce dispositif, bien que pouvant être utilisé pour des installations très différentes, n'est pas adapté à tous les types d'installations photovoltaïques. Plus particulièrement, pour les installations photovoltaïques disposées sur des ombrières, comme celles utilisées sur les parkings, des moyens de fixation particuliers sont utilisés pour monter les panneaux photovoltaïques sur leurs supports. Des brides ont été développées spécialement pour ces installations, et il existe un besoin de mettre à la terre ces brides. Les solutions existantes ne conviennent pas pour ce contexte particulier, ou nécessitent des étapes d'installation qui prennent beaucoup de temps et présentent des risques d'une liaison électrique défaillante.

### Exposé de l'invention

La présente invention vise à pallier ces inconvénients en proposant un dispositif de connexion électrique entre une première pièce et une deuxième pièce , la première pièce appartenant à un équipement électrique, et la deuxième pièce étant une pièce de fixation de la première pièce à une troisième pièce, la troisième pièce appartenant à une structure de support sur laquelle est monté ledit équipement électrique.

Ce dispositif est particulier en ce qu'il comporte un premier moyen de connexion électrique, un deuxième moyen de connexion électrique, et une partie centrale, disposée entre le premier moyen de connexion électrique et le deuxième moyen de connexion électrique.

Ce dispositif est également particulier en ce qu'il est configuré pour que lorsque ladite première pièce est fixée à ladite troisième pièce par l'intermédiaire de ladite deuxième pièce, ledit premier moyen de connexion électrique soit relié électriquement à ladite première pièce, ledit deuxième moyen de connexion électrique soit relié électriquement à ladite deuxième pièce, de manière à générer une connexion électrique entre la première pièce et la deuxième pièce, et la partie centrale est intercalée entre la deuxième pièce et la troisième pièce.

Grâce à ces dispositions, une connexion électrique fiable est obtenue automatiquement entre la première pièce et la deuxième pièce lors du montage des trois pièces et du dispositif. Les risques d'oublier de réaliser cette connexion et de perdre cette connexion avec le temps sont donc réduits, ce qui améliore la sécurité générale de l'installation.

Ledit dispositif de connexion électrique peut comporter une lame électriquement conductrice, ledit dispositif de connexion électrique étant au moins en partie formé dans ladite lame par découpage et/ou pliage, ce qui est un mode de réalisation particulièrement efficace, en plus d'être simple et peu cher à fabriquer.

Ledit dispositif de connexion électrique peut comporter en outre un moyen de rappel disposé entre la partie centrale et le premier moyen de connexion électrique, et agencé pour que lorsque ladite première pièce est fixée à ladite troisième pièce par l'intermédiaire de ladite deuxième pièce, le dispositif de connexion électrique exerce une pression sur la première pièce. Cette pression permet le maintien entre elles des pièces lorsque le serrage n'a pas encore été réalisé, ce qui rend le montage plus simple. De plus, cette pression permet au premier moyen de connexion d'agir efficacement, renforçant la fiabilité de la connexion électrique entre le dispositif et la première pièce, et donc entre la première pièce et la deuxième pièce.

Ledit au moins un moyen de rappel peut comporter des sections rectilignes reliées par au moins une section courbe, le rayon de courbure d'au moins une section courbe pouvant être diminué lorsque le moyen de rappel est comprimé, ce qui est un mode de réalisation simple et efficace de l'invention.

Le premier moyen de connexion électrique et/ou le deuxième moyen de connexion électrique peuvent comprendre au moins une dent pointue, la pointe de ladite au moins une dent pointue pouvant être configurée pour entrer dans la matière de la première, respectivement deuxième pièce, lorsque ladite première pièce est fixée à ladite troisième pièce par l'intermédiaire de ladite deuxième pièce, ce qui est un mode de réalisation simple et efficace de l'invention, particulièrement pour des pièces dont la surface est anodisée.

Ledit dispositif de connexion électrique peut comporter une section en forme de U, une première jambe du U pouvant appartenir à ladite partie centrale, et ledit deuxième moyen de connexion électrique pouvant être disposé à l'extrémité de la deuxième jambe du U, ce qui permet de former un logement dans lequel peut être insérée une partie de la deuxième pièce, et ainsi de réaliser un assemblage stable du dispositif et de la deuxième pièce, par exemple par clipsage.

Le deuxième moyen de connexion électrique peut comprendre au moins une dent pointue, la pointe de ladite au moins une dent pointue pouvant être configurée pour entrer dans la matière de la deuxième pièce, lorsque ladite première pièce est fixée à ladite troisième pièce par l'intermédiaire de ladite deuxième pièce, la pointe de ladite dent pointue pouvant être tournée vers l'intérieur dudit U, ce qui permet lorsqu'une partie de la deuxième pièce est insérée dans le logement formé par le U que la dent s'oppose à son extraction de ce logement.

Le premier moyen de connexion électrique et le deuxième moyen de connexion électrique peuvent comprendre chacun au moins une dent pointue, les pointes desdites dents pointues pouvant être configurées pour entrer dans la matière de la première, respectivement deuxième pièce, lorsque ladite première pièce est fixée à ladite troisième pièce par l'intermédiaire de ladite deuxième pièce, les pointes des dents pointues appartenant au premier moyen de connexion électrique pouvant s'étendre selon une direction opposée aux pointes des dents pointues appartenant au deuxième moyen de connexion électrique, ce qui permet de renforcer la stabilité de l'assemblage formé par les trois pièces et le dispositif de connexion électrique avant serrage, et donc de simplifier le procédé de montage.

Ladite partie centrale peut comporter une ouverture configurée pour être traversée par un moyen de fixation de la deuxième pièce à la troisième pièce, ce qui permet de façon simple de fixer ensemble la deuxième pièce, la troisième pièce et le dispositif de connexion électrique.

Ledit dispositif de connexion électrique peut comporter un troisième moyen de connexion électrique, ledit dispositif de connexion électrique pouvant être configuré pour que lorsque ladite première pièce est fixée à ladite troisième pièce par l'intermédiaire de ladite deuxième pièce, ledit troisième moyen de connexion électrique soit relié électriquement à ladite troisième pièce, ce qui permet lors de l'assemblage des trois pièces et du dispositif, que ces quatre éléments soient automatiquement mis en équipotentialité.

Ledit troisième moyen de connexion électrique peut comprendre au moins une dent pointue située dans ladite partie centrale, la pointe de ladite au moins une dent pointue étant configurée pour entrer dans la matière de la troisième pièce, lorsque ladite première pièce est fixée à ladite troisième pièce par l'intermédiaire de ladite deuxième pièce, ce qui est un mode de réalisation simple et efficace de l'invention.

La présente invention concerne également un ensemble comportant un dispositif de connexion électrique selon l'invention, une première pièce, une deuxième pièce, et une troisième pièce, la première pièce appartenant à un équipement électrique, la deuxième pièce étant une pièce de fixation de la première pièce à la troisième pièce, et la troisième pièce appartenant à une structure de support sur laquelle est monté ledit équipement électrique.

Ledit ensemble est particulier en ce que le dispositif de connexion électrique est configuré pour que lorsque ladite première pièce est fixée à ladite troisième pièce par l'intermédiaire de ladite deuxième pièce, ledit premier moyen de connexion électrique soit relié électriquement à ladite première pièce, ledit deuxième moyen de connexion électrique soit relié électriquement à ladite deuxième pièce, de manière à générer une connexion électrique entre la première pièce et la deuxième pièce, et la partie centrale soit intercalée entre la deuxième pièce et la troisième pièce.

Dans un mode de réalisation particulier, la première pièce peut être un cadre de panneau photovoltaïque, la troisième pièce peut être un rail de support, et la deuxième pièce peut être une bride de fixation du cadre de panneau photovoltaïque au rail de support.

La présente invention concerne également un procédé de fixation d'une première pièce, appartenant à un équipement électrique, à une troisième pièce, appartenant à une structure de support, par l'intermédiaire d'au moins une deuxième pièce, comportant les étapes suivantes :
- mise en place de ladite première pièce sur la dite troisième pièce,
- assemblage de chacune desdites au moins une deuxième pièce à au moins un dispositif de connexion électrique selon l'invention, de façon à créer une liaison électrique entre chaque deuxième pièce et un dispositif de connexion électrique,
- mise en place desdites deuxièmes pièces, de façon à ce que les parties centrales des dispositifs de connexion électrique soient intercalées entre lesdites deuxièmes pièces et la troisième pièce,
- serrage de ladite au moins une deuxième pièce.

Grâce à ces dispositions, une connexion électrique fiable est obtenue automatiquement entre la première pièce et la deuxième pièce lors du montage des trois pièces et du dispositif. Les risques d'oublier de réaliser cette connexion et de perdre cette connexion avec le temps sont donc réduits, ce qui améliore la sécurité générale de l'installation.

### Brève description des dessins

La présente invention et ses avantages apparaîtront mieux dans la description suivante de plusieurs modes de réalisation donnés à titre d'exemples non limitatifs, en référence aux dessins annexés, dans lesquels:
[Fig 1] la fig. 1 est une vue en perspective d'un dispositif de connexion selon un premier mode de réalisation de l'invention,
[Fig 2] la fig. 2 est une vue en perspective du dispositif de connexion de la figure 1, assemblé avec une première version d'une deuxième pièce,
[Fig 3] la fig. 3 est une vue de côté de l'assemblage de la figure 2,
[Fig 4] la fig. 4 est une vue en coupe transversale de l'assemblage de la figure 2,
[Fig 5] la fig. 5 est une vue de côté de l'assemblage de la figure 2, assemblé avec une première pièce et une deuxième pièce,
[Fig 6] la fig. 6 est une vue en perspective de l'assemblage de la figure 5, et
[Fig 7] la fig. 6 est une vue en perspective du dispositif de connexion de la figure 1, assemblé avec une deuxième version d'une deuxième pièce.

### Description des modes de réalisation

Dans les exemples de réalisation illustrés, les éléments ou parties identiques portent les mêmes numéros de référence. En outre, les termes qui ont un sens relatif, tels que vertical, horizontal, droite, gauche, avant, arrière, au-dessus, en-dessous, etc. doivent être interprétés dans des conditions normales d'utilisation de l'invention, et telles que représentées sur les figures. Par ailleurs, les positions géométriques indiquées dans la description et les revendications, telles que « perpendiculaire », « parallèle », « symétrique » ne sont pas limitées au sens strict défini en géométrie, mais s'étendent à des positions géométriques qui sont proches, c'est-à-dire qui acceptent une certaine tolérance dans le domaine technique considéré, sans influence sur le résultat obtenu. Cette tolérance est notamment introduite par l'adverbe « sensiblement », sans que ce terme soit nécessairement répété devant chaque adjectif.

En référence aux figures, le dispositif 1 de connexion électrique selon l'invention permet d'effectuer la connexion électrique entre une première pièce 2a et une deuxième pièce 2b . La première pièce 2a appartient à un équipement électrique. La deuxième pièce 2b est une pièce de fixation de la première pièce 2a à une troisième pièce 2c, la troisième pièce 2c appartenant à une structure de support sur laquelle est monté l'équipement électrique.

On entend par « équipement électrique », tout élément qui peut être électriquement conducteur, et par « structure de support », toute surface de réception apte à recevoir l'équipement électrique. Les première, deuxième et troisième pièces 2a, 2b, 2c sont généralement réalisées dans des matériaux électriquement conducteurs, essentiellement métalliques, parfois anodisés, c'est-à-dire recouverts en surface d'une couche d'isolation. En particulier, la première pièce 2a est généralement réalisée en aluminium, et recouverte d'une couche d'anodisation.

Ainsi donc, dans la présente description, l'expression « relier » ou « connecter électriquement » des pièces entre elles, désigne le fait d'établir une connexion électrique entre les parties conductrices des pièces.

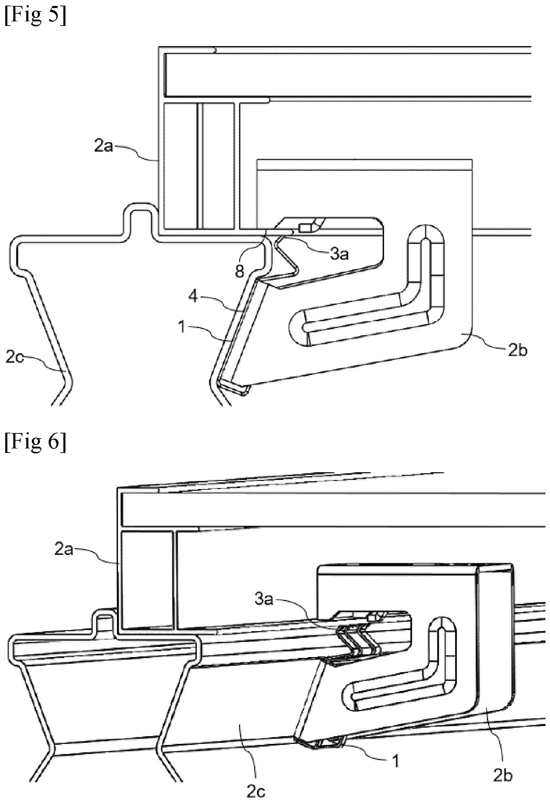

Les figures 5 et 6 illustrent un exemple d'application de l'invention dans le cadre d'une installation de panneaux photovoltaïques, la première pièce 2a étant un cadre de panneau photovoltaïque, la troisième pièce 2c un rail de support, et la deuxième pièce 2b une bride de fixation du cadre de panneau photovoltaïque au rail de support.

La troisième pièce 2c peut être un rail, comme illustré aux figures 5 et 6. Bien entendu, tout autre type de structure de support avec un mode de montage différent peut convenir, dont l'emplacement, la forme et la conception sont adaptés à l'application et à la destination de ladite installation. La structure de support peut être disposée au sol ou en hauteur, conçue pour définir une surface de réception de forme générale plane, courbe ou complexe, disposée dans un plan général horizontal, vertical ou incliné, et définie par des organes de support ponctuels ou discontinus comme des plots, des tronçons de rail, ou par des organes de support continus comme des rails, ou encore par une combinaison des deux, ainsi que par tout autre moyen de support équivalent. Dans un mode préféré de l'invention, la troisième pièce 2c est un rail, et la présente invention concerne une installation photovoltaïque de type ombrière.

L'invention n'est pas limitée aux installations de panneaux photovoltaïques mais s'étend à toute application mettant en œuvre des pièces au moins partiellement conductrices nécessitant une fixation mécanique et une mise en équipotentialité entre elles, tel que des panneaux thermiques, des panneaux hybrides thermiques/photovoltaïques ou similaires, des onduleurs ou micro-onduleurs, des structures métalliques de toutes sortes, des chemins de câbles, des cages de Faraday, des bâtis de machine, des cabines techniques de travail (ex. cabines de peinture), etc. ces exemples n'étant pas limitatifs.

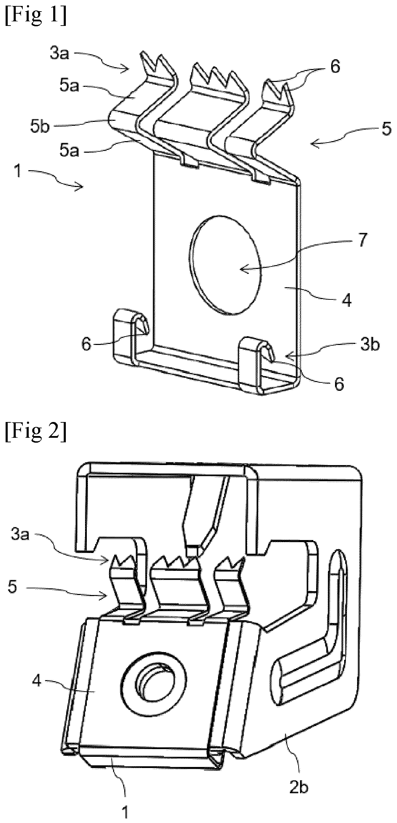

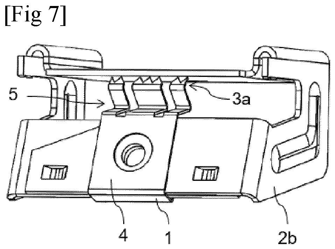

Comme illustré en figures 2 et 7, un même dispositif 1 peut être adapté à des deuxièmes pièces 2b présentant différentes dimensions. Cependant, lorsque la variation des formes et/ou dimensions de la deuxième pièce 2b et/ou de la première pièce 2a et/ou de la troisième pièce 2c est plus importante, le dispositif 1 peut également varier en forme et/ou en dimensions, pour s'adapter à différentes configurations.

Le dispositif 1 comporte un premier moyen de connexion électrique 3a, et un deuxième moyen de connexion électrique 3b. Les premier et deuxième moyens de connexion électrique 3a, 3b sont de préférence disposés à deux extrémités opposées du dispositif 1.

Le dispositif 1 comporte également une partie centrale 4, disposée entre le premier moyen de connexion électrique et le deuxième moyen de connexion électrique.

Le dispositif 1 est configuré pour que lorsque la première pièce 2a est fixée à la troisième pièce 2c par l'intermédiaire de la deuxième pièce 2b, le premier moyen de connexion électrique 3a est relié électriquement à la première pièce 2a, et le deuxième moyen de connexion électrique 3b est relié électriquement à la deuxième pièce 2b. Ces deux connexions sont de préférence générées automatiquement, c'est-à-dire qu'elles sont la conséquence de l'assemblage mécanique et éventuellement de la fixation des pièces 2a, 2b, 2c entre elles. Ces deux connexions ont pour conséquence une connexion électrique entre la première pièce 2a et la deuxième pièce 2c, car le premier et le deuxième moyens de connexion électrique 3a, 3b sont reliés électriquement entre eux au sein du dispositif 1, le dispositif 1 étant de préférence entièrement réalisé dans un matériau conducteur.

Le dispositif 1 est également configuré pour que lorsque la première pièce 2a est fixée à la troisième pièce 2c par l'intermédiaire de la deuxième pièce 2b, la partie centrale 4 se retrouve au moins partiellement intercalée entre la deuxième pièce 2b et la troisième pièce 2c.

Le dispositif 1 peut comporter ou être constitué d'une lame de matière électriquement conductrice, ladite lame étant découpée et/ou pliée pour former tout ou partie du dispositif 1. Cette matière est de préférence métallique et élastique, par exemple une bande en acier ressort inoxydable. Cette bande de matière peut avoir une épaisseur relativement faible et par exemple comprise entre 0,5mm et 1mm, sans que ces valeurs ne soient limitatives. Bien entendu, toute autre matière techniquement équivalente, ayant de bonnes propriétés de conductivité électrique et d'élasticité peut convenir. Cette matière peut en outre comporter ou non un traitement de surface thermique et/ou chimique pour ajouter des propriétés par exemple de protection en fonction de la nature des pièces 2a, 2b, 2c en présence du milieu ambiant.

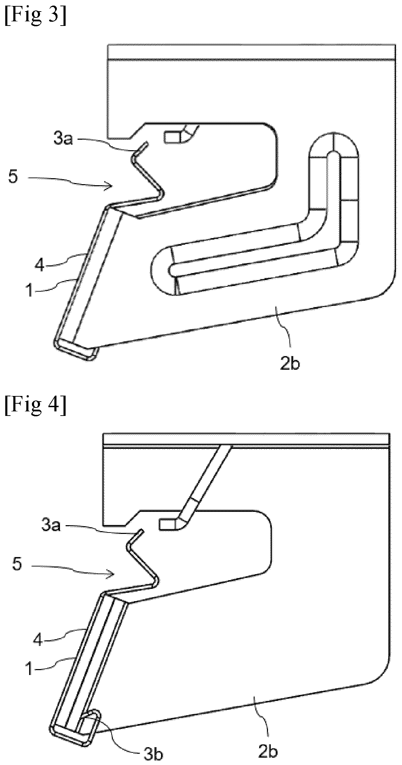

Dans un mode de réalisation illustré à titre d'exemples aux figures 1 à 7, le dispositif 1 comporte un moyen de rappel 5, disposé entre la partie centrale 4 et le premier moyen de connexion électrique 3a. Le moyen de rappel est agencé pour que lorsque ladite première pièce est fixée à ladite troisième pièce par l'intermédiaire de ladite deuxième pièce, le moyen de rappel est mis sous pression, de sorte que le dispositif exerce une pression sur la première pièce 2a. Cette pression est de préférence exercée au niveau du premier moyen de connexion électrique 3a, ce qui permet d'augmenter la fiabilité de la connexion électrique entre le premier moyen de connexion électrique 3a et la première pièce 2a.

Le moyen de rappel 5 peut comporter plusieurs sections rectilignes 5a, reliées par au moins une section courbe 5b. Par exemple, comme illustré aux figures 1 à 7, le moyen de rappel 5 peut comporter deux sections rectilignes 5a, reliées par une section courbe 5b. Le matériau de la section courbe 5b présente alors la flexibilité nécessaire pour que le rayon de courbure de la section courbe 5b puisse être modifié, et notamment que le rayon de courbure de la section courbe 5b puisse être diminué afin de mettre le moyen de rappel 5 sous pression.

Au moins un des premier ou deuxième moyens de connexion électrique 3a, 3b peut comporter au moins une dent pointue 6, formée par exemple par découpage et pliage dans une lame électriquement conductrice comme décrit précédemment. Un des deux premier ou deuxième moyens de connexion électrique 3a, 3b peut comporter une pluralité de dents 6 alignées dans le même plan. Le premier moyen de connexion électrique 3a et/ou le deuxième moyen de connexion électrique 3b peut comporter un ou plusieurs groupes de dents alignées dans le même plan. Par exemple, comme illustré en figure 1, le premier moyen de connexion électrique 3a peut comporter trois groupes de dents 6 : deux groupes de deux dents sur les côtés, et un groupe de trois dents au milieu, les groupes de dents étant séparés par des espaces libres. Comme illustré en figure 1, le deuxième moyen de connexion électrique 3b peut comporter deux dents 6, une dent sur chaque côté, séparées par un espace libre. Ces exemples ne limitent bien sûr en rien la portée de l'invention, le nombre de dents 6 et les espacements éventuels entre dents 6 ou groupes de dents 6 dépendant de chaque application.

Les dents 6 sont configurées pour pénétrer la matière conductrice des pièces 2a, 2b, éventuellement après avoir traversé une couche d'anodisation, afin de produire des connexions électriques fiables. Cette pénétration, et donc ces connexions fiables, peuvent avoir lieu dès l'assemblage des pièces 2a, 2b, 2c entre elles, ou nécessiter un serrage d'au moins deux des pièces 2a, 2b, 2c entre elles pour assurer la fixation mécanique des pièces 2a, 2b, 2c entre elles. Dans l'exemple illustré, la pénétration des dents 6 du premier moyen de connexion 3a dans la première pièce 2a peut nécessiter un serrage de la deuxième pièce 2b à la troisième pièce 2c, tandis que la pénétration des dents 6 du deuxième moyen de connexion 3b dans la deuxième pièce 2b ne nécessite que l'assemblage du dispositif 1 et de la deuxième pièce 2b.

Dans un mode de réalisation illustré à titre d'exemples aux figures 1 à 7, le dispositif 1 comporte une section en forme de U. Par une « forme de U », on entend dans le cadre de la présente invention une forme comportant deux jambes, reliée entre elles par l'intermédiaire d'un fond. Le fond peut être plat, comme illustré sur les figures, ou arrondi. L'angle formé par les jambes avec le fond peut être identique pour les deux jambes, par exemple un angle droit, ou différent pour chaque jambe. Les jambes peuvent être parallèles entre elles, ou former un angle, par exemple un angle inférieur à 20°, de préférence inférieur à 10°. Cet angle peut être disposé de façon à rapprocher les extrémités libres des jambes entre elles, ou à les éloigner l'une de l'autre, par rapport à leurs extrémités situées du côté du fond du U.

Les jambes du U dont il est question dans la présente description sont différentes l'une de l'autre, le U ne présente donc pas une forme symétrique. En effet, une première jambe du U appartient à la partie centrale 4, et s'étend à partir du fond du U sur tout ou partie de la partie centrale 4. La première jambe du U ne comprend donc pas d'extrémité libre. La deuxième jambe du U comporte une extrémité libre, au niveau de laquelle est disposé le deuxième moyen de connexion électrique 3b.

La section en forme de U est de préférence configurée pour former un logement afin d'accueillir une partie de la deuxième pièce 2b, et de préférence de pincer cette partie afin que la section en forme de U constitue un moyen de fixation du dispositif 1 à la deuxième pièce 2b.

Lorsque le dispositif 1 comporte la section en forme de U et que le deuxième moyen de connexion électrique 3b comporte au moins une dent pointue 6, la pointe de cette dent pointue 6 est de préférence tournée vers l'intérieur du U, c'est à-dire qu'elle forme un angle inférieur à 90° avec la jambe du U à l'extrémité de laquelle elle se trouve. Ainsi, lorsqu'une partie de la deuxième pièce 2b est insérée dans le U, la dent 6 est configurée pour s'opposer à un retrait de cette partie de la deuxième pièce 2b du logement formé par le U. La dent 6, en plus de sa fonction de connexion électrique, a donc également une fonction de fixation mécanique.

Lorsque le premier moyen de connexion électrique 3a et le deuxième moyen de connexion électrique 3b comportent tout deux au moins une dent pointue 6, il est avantageux que la pointe de la ou des dents 6 du premier moyen de connexion électrique 3a s'étende dans une direction opposée à la direction dans laquelle s'étende la ou les dents 6 du deuxième moyen de connexion électrique 3b. Dans la phrase précédente, le terme « opposée » ne signifie pas forcément que les directions sont diamétralement opposées, mais que les dents 6 s'opposent pour permettre au dispositif de connexion 1 d'être agrippé à la première pièce 2a et à la deuxième pièce 2b dans des directions non parallèles, et donc d'éviter un démontage accidentel du dispositif de connexion 1.

Comme dans les exemples illustrés aux figures 1, 2 et 7, le dispositif 1 peut comporter une ouverture 7 configurée pour être traversée par un moyen de fixation. L'ouverture 7 est de préférence de forme circulaire, afin d'être traversée par exemple par une vis. L'ouverture 7 se trouve de préférence dans la partie centrale 6, afin que le moyen de fixation puisse efficacement fixer entre elles la deuxième pièce 2b et la troisième pièce 2c.

Dans un mode de réalisation non représenté, le dispositif de connexion électrique comporte un troisième moyen de connexion électrique. Le dispositif 1 est alors configuré pour que lorsque la première pièce 2a est fixée à la troisième pièce 2c par l'intermédiaire de la deuxième pièce 2b, le troisième moyen de connexion électrique soit relié électriquement à ladite troisième pièce 2c. Ceci permet donc une mise en équipotentialité des trois pièces 2a, 2b, 2c, et donc une mise à la terre automatique de deux des pièces 2a, 2b, 2c en mettant à la terre une seule d'entre elles, par exemple la deuxième pièce 2b. La connexion du troisième moyen de connexion électrique à la troisième pièce 2c est de préférence générée automatiquement, c'est-à-dire qu'elle est la conséquence de l'assemblage mécanique et éventuellement de la fixation des pièces 2a, 2b, 2c entre elles.

Le troisième moyen de connexion électrique comporte de préférence une dent pointue située dans la partie centrale 4. Ainsi, lorsque la première pièce 2a est fixée à la troisième pièce 2c par l'intermédiaire de la deuxième pièce 2b, la dent du troisième moyen de connexion se retrouve intercalée entre la deuxième pièce 2b et la troisième pièce 2c.

La dent du troisième moyen de connexion électrique est formée par exemple par découpage et pliage dans une lame électriquement conductrice comme décrit précédemment. Le troisième moyen de connexion électrique peut comporter une pluralité de dents alignées dans le même plan. Ces dents sont configurées pour pénétrer la matière de la troisième pièce 2c, éventuellement après avoir traversé une couche d'anodisation, afin de produire des connexions électriques fiables. Cette pénétration, et donc cette connexion fiable, peuvent avoir lieu dès l'assemblage des pièces 2a, 2b, 2c entre elles, ou nécessiter un serrage de la deuxième pièce 2b et la troisième pièce 2c entre elles.

Un ou plusieurs dispositifs 1 peuvent être utilisés dans un procédé de fixation d'une première pièce 2a, appartenant à un équipement électrique, à une troisième pièce 2c, appartenant à une structure de support, par l'intermédiaire d'au moins une deuxième pièce 2b. Ce procédé comporte les étapes suivantes :
- mise en place de ladite première pièce 2a sur la dite troisième pièce 2c,
- assemblage de chaque deuxième pièce à au moins un dispositif 1, de façon à créer une liaison électrique entre chaque deuxième pièce 2b avec un dispositif 1. Par exemple, cet assemblage peut constituer en l'insertion d'une partie des deuxièmes pièces 2b dans une section en U du dispositif 1, ce mode de réalisation permettant aux positions relatives des deuxièmes pièces 2b et du dispositif 1 d'être guidées pour être correctes, le U pouvant agir comme un clip afin de maintenir les pièces ensemble par exemple lors d'une étape de transport. Cet assemblage peut être réalisé avant l'étape précédente, et hors du chantier, par exemple en usine,
- mise en place desdites deuxièmes pièces, de façon à ce que les parties centrales des dispositifs de connexion électrique soient intercalées entre la deuxième pièce et la troisième pièce. Dans l'exemple représenté aux figures 5 et 6, une surface d'appui 8 de la deuxième pièce 2b repose sur la première pièce 2a. Grâce au contact de la première pièce 2a d'une part avec la deuxième pièce 2a au niveau de sa surface d'appui 8, et d'autre part avec le dispositif 1, au niveau du premier moyen de connexion électrique 3a, la deuxième pièce 2b est maintenue en place par rapport à la première pièce 2a et à la deuxième pièce 2c, et le risque que l'assemblage des trois pièces 2a, 2b, 2c se défasse avant serrage est réduit.
- serrage de ladite deuxième pièce, par exemple par une vis traversant l'ouverture 7. La vis peut être une vis auto-perçante, et percer notamment la surface de la troisième pièce 2c lors de cette étape. Ainsi, si la vis est réalisée dans un matériau conducteur, la vis peut réaliser une connexion électrique entre la troisième pièce 2c la deuxième pièce 2b et/ou le dispositif 1. Ceci permet de mettre en équipotentialité la troisième pièce 2c avec la première pièce 2a et la deuxième pièce 2b, sans avoir à utiliser un troisième moyen de connexion électrique tel que décrit plus haut.

La présente invention n'est bien entendu pas limitée aux exemples de réalisation décrits mais s'étend à toute modification et variante évidentes pour un homme du métier dans la limite des revendications annexées. En outre, les caractéristiques techniques des différents modes de réalisation et variantes mentionnés ci-dessus peuvent être, en totalité ou pour certaines d'entre elles, combinées entre elles.

## Revendications

1. Dispositif de connexion électrique (1) entre une première pièce (2a) et une deuxième pièce (2b) , la première pièce (2a) appartenant à un équipement électrique, et la deuxième pièce (2b) étant une pièce de fixation de la première pièce (2a) à une troisième pièce (2c), la troisième pièce (2c) appartenant à une structure de support sur laquelle est monté ledit équipement électrique, ***caractérisé en ce que*** il comporte un premier moyen de connexion électrique (3a), un deuxième moyen de connexion électrique (3b), et une partie centrale (4), disposée entre le premier moyen de connexion électrique (3a) et le deuxième moyen de connexion électrique (3b), ***et en ce que*** il est configuré pour que lorsque ladite première pièce (2a) est fixée à ladite troisième pièce (2c) par l'intermédiaire de ladite deuxième pièce (2b), ledit premier moyen de connexion électrique (3a) soit relié électriquement à ladite première pièce (2a), ledit deuxième moyen de connexion électrique (3b) soit relié électriquement à ladite deuxième pièce (2b), de manière à générer une connexion électrique entre la première pièce (2a) et la deuxième pièce (2b), et la partie centrale (4) soit intercalée entre la deuxième pièce (2b) et la troisième pièce (2c).

2. Dispositif de connexion électrique (1) selon la revendication 1, **caractérisé en ce qu'**il comporte une lame électriquement conductrice, ledit dispositif de connexion électrique (1) étant au moins en partie formé dans ladite lame par découpage et/ou pliage.

3. Dispositif de connexion électrique (1) selon l'une des revendications 1 à 2, **caractérisé en ce qu'**il comporte en outre un moyen de rappel (5) disposé entre la partie centrale (4) et le premier moyen de connexion électrique (3a), et agencé pour que lorsque ladite première pièce (2a) est fixée à ladite troisième pièce (2c) par l'intermédiaire de ladite deuxième pièce (2b), le dispositif de connexion électrique (1) exerce une pression sur la première pièce.

4. Dispositif de connexion électrique (1) selon la revendication 3, **caractérisé en ce que** ledit au moins un moyen de rappel (5) comporte des sections rectilignes (5a) reliées par au moins une section courbe (5b), le rayon de courbure d'au moins une section courbe (5b) étant diminué lorsque le moyen de rappel (5) est comprimé.

5. Dispositif de connexion électrique (1) selon l'une des revendications 1 à 4, **caractérisé en ce que** le premier moyen de connexion électrique (3a) et/ou le deuxième moyen de connexion électrique (3b) comprend au moins une dent pointue (6), la pointe de ladite au moins une dent pointue (6) étant configurée pour entrer dans la matière de la première, respectivement deuxième pièce, lorsque ladite première pièce (2a) est fixée à ladite troisième pièce (2c) par l'intermédiaire de ladite deuxième pièce (2b).

6. Dispositif de connexion électrique (1) selon l'une des revendications 1 à 5, **caractérisé en ce qu'**il comporte une section en forme de U, une première jambe du U appartenant à ladite partie centrale (4), et ledit deuxième moyen de connexion électrique (3b) étant disposé à l'extrémité de la deuxième jambe du U.

7. Dispositif de connexion électrique (1) selon les revendications 5 et 6, **caractérisé en ce que** le deuxième moyen de connexion électrique (3b) comprend au moins une dent pointue (6), la pointe de ladite au moins une dent pointue (6) étant configurée pour entrer dans la matière de la deuxième pièce (2b), lorsque ladite première pièce (2a) est fixée à ladite troisième pièce (2c) par l'intermédiaire de ladite deuxième pièce (2b), la pointe de ladite dent pointue (6) étant tournée vers l'intérieur dudit U.

8. Dispositif de connexion électrique (1) selon l'une des revendications 6 à 7, **caractérisé en ce que** le premier moyen de connexion électrique (3a) et le deuxième moyen de connexion électrique (3b) comprennent chacun au moins une dent pointue (6), les pointes desdites dents pointues (6) étant configurées pour entrer dans la matière de la première, respectivement deuxième pièce (2a, 2b), lorsque ladite première pièce (2a) est fixée à ladite troisième pièce (2c) par l'intermédiaire de ladite deuxième pièce (2b), les pointes des dents pointues (6) appartenant au premier moyen de connexion électrique (3a) s'étendant selon une direction opposée aux pointes des dents pointues (6) appartenant au deuxième moyen de connexion électrique (3b).

9. Dispositif de connexion électrique (1) selon l'une des revendications 1 à 8, **caractérisé en ce que** ladite partie centrale (4) comporte une ouverture (7) configurée pour être traversée par un moyen de fixation de la deuxième pièce (2b) à la troisième pièce (2c).

10. Dispositif de connexion électrique (1) selon l'une des revendications 1 à 9, **caractérisé en ce qu'**il comporte un troisième moyen de connexion électrique, ledit dispositif de connexion électrique (1) étant configuré pour que lorsque ladite première pièce (2a) est fixée à ladite troisième pièce (2c) par l'intermédiaire de ladite deuxième pièce (2c), ledit troisième moyen de connexion électrique soit relié électriquement à ladite troisième pièce (2c).

11. Dispositif de connexion électrique selon la revendication 10, **caractérisé en ce que** ledit troisième moyen de connexion électrique comprend au moins une dent pointue située dans ladite partie centrale, la pointe de ladite au moins une dent pointue étant configurée pour entrer dans la matière de la troisième pièce (2c), lorsque ladite première pièce (2a) est fixée à ladite troisième pièce (2c) par l'intermédiaire de ladite deuxième pièce (2b).

12. Ensemble comportant un dispositif de connexion électrique selon l'une des revendications 1 à 11, une première pièce (2a), une deuxième pièce (2b), et une troisième pièce (2c), la première pièce (2a) appartenant à un équipement électrique, la deuxième pièce (2b) étant une pièce de fixation de la première pièce (2a) à la troisième pièce (2c), et la troisième pièce (2c) appartenant à une structure de support sur laquelle est monté ledit équipement électrique, ***caractérisé en ce que*** le dispositif de connexion électrique (1) est configuré pour que lorsque ladite première pièce (2a) est fixée à ladite troisième pièce (2c) par l'intermédiaire de ladite deuxième pièce (2b), ledit premier moyen de connexion électrique (3a) soit relié électriquement à ladite première pièce (2a), ledit deuxième moyen de connexion électrique (3b) soit relié électriquement à ladite deuxième pièce (2b), de manière à générer une connexion électrique entre la première pièce (2a) et la deuxième pièce (2b), et la partie centrale (4) soit intercalée entre la deuxième pièce (2b) et la troisième pièce (2c).

13. Ensemble selon la revendication précédente, dans lequel la première pièce (2a) est un cadre de panneau photovoltaïque, la troisième pièce (2c) est un rail de support, et la deuxième pièce (2b) est une bride de fixation du cadre de panneau photovoltaïque (2a) au rail de support (2c).

14. Procédé de fixation d'une première pièce (2a), appartenant à un équipement électrique, à une troisième pièce (2c), appartenant à une structure de support, par l'intermédiaire d'au moins une deuxième pièce (2b), comportant les étapes suivantes :
- mise en place de ladite première pièce (2a) sur la dite troisième pièce (2c),
- assemblage de chacune desdites au moins une deuxième pièce (2b) à au moins un dispositif de connexion électrique (1) selon l'une des revendications 1 à 11, de façon à créer une liaison électrique entre chaque deuxième pièce (2b) et un dispositif de connexion électrique (1),
- mise en place desdites deuxièmes pièces (2b), de façon à ce que les parties centrales (4) des dispositifs de connexion électrique soient intercalées entre lesdites deuxièmes pièces (2b) et la troisième pièce (2c),
- serrage de ladite au moins une deuxième pièce (2b).
